# EUROPEAN PATENT APPLICATION

(11) **EP 4 325 637 A1**
(43) Date of publication of application: **21.02.2024**
(21) Application number: 22896137.1
(22) Date of filing: 18.11.2022
(51) Int. Cl.: H01M 50/124

(54) **SECONDARY BATTERY, AND BATTERY PACK AND VEHICLE COMPRISING SAME**

(30) Priority: 19.11.2021 KR 20210160776
(71) Applicant: LG Energy Solution, Ltd., Seoul 07335 (KR)
(72) Inventor: WON, Jin Hyeok, Seoul 34122 (KR); RYU, Duk Hyun, Seoul 34122 (KR)
(74) Representative: Goddar, Heinz J.
(86) International application number: PCT/KR2022/018320
(87) International publication number: WO 2023/090940

(57) **Abstract**

An embodiment of the present invention provides a secondary battery comprising an electrode assembly configured by winding a stack made by sequentially stacking a first electrode, a separator, and a second electrode, and a battery can configured to accommodate the electrode assembly and an electrolyte, in which the battery can has a bottom portion at one side thereof, an opening portion at the other side opposite to the bottom portion, and a cylindrical sidewall, in which the electrode assembly has a first end from which a first electrode tab is extended, and a second end from which a second electrode tab is extended, in which the first end and the battery can are electrically connected, in which the sidewall of the battery can comprises an insulative coating layer provided on an inner surface corresponding to the second end, in which a second current collecting plate is electrically connected to the second electrode tab, and in which an insulation member is provided between the second current collecting plate and the bottom portion of the battery can, thereby providing an effect of increasing a space capable of being ensured by the electrode assembly accommodated in battery can.

## Description

### [Technical Field]

The present invention relates to a secondary battery and a battery pack and a vehicle comprising the same.

This application claims priority to and the benefit of Korean Patent Application No. 10-2021-0160776 filed with the Korean Intellectual Property Office on November 19, 2021, the entire contents of which are incorporated herein by reference.

### [Background Art]

A secondary battery is easy to apply to product groups and has high electrical characteristics such as high energy density. Therefore, the secondary battery is widely applied not only to portable devices but also to electric vehicles (EVs) or hybrid electric vehicles (HEVs) driven by electrical driving sources.

The secondary battery attracts attention as a new energy source for improving environmental-friendly characteristics and energy efficiency because the secondary battery achieves a primary advantage of innovatively reducing the use of fossil fuel and does not generate any by-products from the use of energy.

Types of secondary batteries currently used widely comprise a lithium-ion battery, a lithium-polymer battery, a nickel-cadmium battery, a nickel-hydrogen battery, a nickel-zinc battery, and the like. An operating voltage of a unit secondary battery cell, i.e., a unit battery cell is about 2.5 V to 4.5 V. Therefore, when an output voltage higher than the operating voltage is required, a plurality of battery cells is connected in series and constitutes a battery pack. In addition, the plurality of battery cells is connected in parallel and constitutes the battery pack depending on a charge/discharge capacity required for the battery pack. Therefore, the number of battery cells comprised in the battery pack and the type of electrical connection between the battery cells may be variously set depending on required output voltages and/or charge/discharge capacities.

Meanwhile, cylindrical batteries, angular batteries, and pouch batteries are known as the types of secondary battery cells. The cylindrical battery is made by interposing a separator, which is an insulator, between a positive electrode and a negative electrode, winding the assembly of the separator, the positive electrode, and the negative electrode to form an electrode assembly in the form of a jelly roll, and inserting the electrode assembly together with an electrolyte into a battery can.

In this case, the cylindrical secondary battery has a structure in which a rivet-type positive electrode terminal, which penetrates a bottom surface of the battery can, is applied as a positive electrode terminal of the cylindrical secondary battery by being substituted for a cap that is a sealing body configured to seal an opening port of the battery can in the related art. Therefore, an insulator is applied to insulate a negative electrode having the opposite polarity to a member (e.g., a positive electrode current collecting plate and an end of the positive electrode from which a tab is extended) electrically connected to the positive electrode terminal.

However, the insulator has a thick shape that surrounds both the positive electrode current collecting plate and the end of the positive electrode from which the tab is extended, which causes an unnecessary loss of space.

Therefore, there are problems in that a proportion of the insulator, which occupies the inside of the battery can, is large, a size of the electrode assembly, which may be accommodated in the same battery can, is decreased, and thus, a capacity of the secondary battery is decreased.

### [Detailed Description of the Invention]

### [Technical Problem]

An object of the present invention is to provide a secondary battery and a battery pack and a vehicle comprising the same, which efficiently ensure insulation and solve a problem of a decrease in capacity caused by a decrease in diameter of an electrode assembly.

Another object of the present invention is to provide a secondary battery that is assembled by a simplified assembling process to improve process efficiency.

### [Technical Solution]

The present inventors have found that the problem may be solved by changing a shape of an insulator comprised in a secondary battery. Specifically, the present inventors have found that an additional space, which may be ensured in an electrode assembly, may be provided by providing different insulation members on a portion where current collecting plates having opposite polarities are in contact with each other in a battery can and a portion where electrode tabs having opposite polarities are in contact with each other in the battery can.

The present invention provides a secondary battery comprising the technical feature and a battery pack and a vehicle comprising the same.

An embodiment of the present invention provides a secondary battery comprising: an electrode assembly configured by winding a stack made by sequentially stacking a first electrode, a separator, and a second electrode; and a battery can configured to accommodate the electrode assembly and an electrolyte, in which the battery can has a bottom portion at one side thereof, an opening portion at the other side opposite to the bottom portion, and a cylindrical sidewall, in which the electrode assembly has a first end from which a first electrode tab is extended, and a second end from which a second electrode tab is extended, in which the first end and the battery can are electrically connected, in which the sidewall of the battery can comprises an insulative coating layer provided on an inner surface corresponding to the second end, in which a second current collecting plate is electrically connected to the second electrode tab, and in which an insulation member is provided between the second current collecting plate and the bottom portion of the battery can.

In addition, another embodiment of the present invention provides a battery pack comprising one or more secondary batteries.

Lastly, still another embodiment according to the present invention provides a vehicle comprising one or more battery packs.

### [Advantageous Effects]

According to the embodiment of the present invention, the process of insulating the current collecting plate, which has the opposite polarity to the battery can, and the electrode end, which has the opposite polarity to the battery can, by surrounding the current collecting plate and the electrode end with the insulation member (e.g., the insulator) at once and the process of additionally insulating the electrode end having the opposite polarity by additionally surrounding the electrode end with the additional insulation member (e.g., the insulation tape) one or more times are eliminated, which makes it possible to simplify the insulation process and ensure the desired insulation effect.

In addition, according to the embodiment of the present invention, it is possible to increase the diameter of the electrode assembly capable of being accommodated in the battery can having the same dimension by preventing the problem in that the space capable of being occupied by the electrode assembly relatively decreases when both the current collecting plate, which has the opposite polarity to the battery can, and the electrode end, which has the opposite polarity to the battery can, are insulated by being surrounded by a single thick insulation member (e.g., an insulator).

In addition, according to the embodiment of the present invention, the insulation member may comprise a high-heat resistance material and exhibit an excellent heat dissipation effect when a high temperature is made because of an increase in internal temperature of the battery.

Therefore, the secondary battery according to the embodiment of the present invention may increase the battery capacity while being maintained at a level at which the insulation may be easily implemented. Further, it is possible to expect a heat dissipation effect when the internal temperature is raised. Further, it is possible to implement high-energy density and reduce costs.

### [Brief Description of Drawings]

FIG. 1 is a view illustrating a secondary battery in the related art.
FIGS. 2 and 3 are views illustrating a structure of the secondary battery according to the embodiment of the present invention.
FIG. 4 is a view illustrating a schematic configuration of a battery pack comprising the secondary battery according to the embodiment of the present specification.
FIG. 5 is a view illustrating a schematic configuration of a vehicle comprising the battery pack according to the embodiment of the present specification.

### [Explanation of Reference Numerals and Symbols]

1: Battery can
2: Electrode assembly
3: Insulation member
4: Additional insulation member (insulation tape)
5: Second electrode end
6: First current collecting plate
7: Insulative coating layer
8: Second electrode terminal
9: Gasket
10: Second current collecting plate
11: Core part of electrode assembly
100: Secondary battery
200: Battery pack
201: Secondary battery cell
V: Vehicle

### [Best Mode]

Terms or words used in the specification and the claims should not be interpreted as being limited to a general or dictionary meaning and should be interpreted as a meaning and a concept which conform to the technical spirit of the present invention based on a principle that an inventor can appropriately define a concept of a term in order to describe his/her own invention by the best method.

Throughout the specification, unless explicitly described to the contrary, the word "comprise/comprise" and variations such as "comprises/comprises" or "comprising/comprising" will be understood to imply the inclusion of stated elements, not the exclusion of any other elements. In addition, the term "part", "device", or the like, which is described in the specification, means a unit that processes one or more functions or operations.

Hereinafter, embodiments according to the present invention will be described.

An embodiment of the present invention provides a secondary battery comprising: an electrode assembly configured by winding a stack made by sequentially stacking a first electrode, a separator, and a second electrode; and a battery can configured to accommodate the electrode assembly and an electrolyte, in which the battery can has a bottom portion at one side thereof, an opening portion at the other side opposite to the bottom portion, and a cylindrical sidewall, in which the electrode assembly has a first end from which a first electrode tab is extended, and a second end from which a second electrode tab is extended, in which the first end and the battery can are electrically connected, in which the sidewall of the battery can comprises an insulative coating layer provided on an inner surface corresponding to the second end, in which a second current collecting plate is electrically connected to the second electrode tab, and in which an insulation member is provided between the second current collecting plate and the bottom portion of the battery can.

In the present specification, the first and second electrodes are electrodes having opposite polarities. Any one of the first and second electrodes is a positive electrode, and the other electrode is a negative electrode. In the present specification, the first and second electrodes may each have a sheet shape. However, the first and second electrodes having any shape may be used without limitation as long as the first and second electrodes are electrodes publicly known in the art.

In the present specification, the separator means an insulator interposed between the first and second electrodes having different polarities to prevent a short circuit between the first and second electrodes and/or insulate the first and second electrodes. In the present specification, the separator may have a sheet shape. In the present specification, the separator may be an insulative thin film having a high ion-transmittance rate and high mechanical strength. However, any separator may be used without limitation as long as the separator is a separator publicly known in the art.

In the present specification, the electrolyte may be a lithium-salt-containing nonaqueous electrolyte, and a liquid electrolyte is mainly used. However, any electrolyte may be used without limitation as long as the electrolyte is an electrolyte publicly known in the art.

In the present specification, the battery can may comprise iron, nickel, or an alloy thereof or be plated with these materials. However, any battery can may be used without limitation as long as the battery can is a battery can publicly known in the art.

In the present specification, the battery can has the bottom portion provided at one side thereof and having a sealed portion, the opening portion provided at the other side opposite to the bottom portion and having an opened portion, and the cylindrical sidewall. The cylindrical sidewall may have a beading portion and a crimping portion formed on a main body part and the other parts, and the main body corresponds to a portion where the electrode assembly is mounted.

In the present specification, the insulative coating layer is a material applied with a small thickness and having a particular insulative substance. The insulative coating layer may be a plate, a thin film, a tape, or the like applied onto a part having a polarity, being in contact with a part having a polarity, being in contact with spaces having opposite polarities, or interposed between and spaced apart from spaces having opposite polarities in order to prevent electrical contact or short circuit between parts having opposite polarities.

In the present specification, the configuration in which the electrode tab is "extended" means a state in which the separator does not protect the first and/or second electrode tab. Therefore, the extended or exposed tab may come into contact with an electrode provided in the battery can and having a different polarity from the tab, which may cause a short circuit. For example, the insulative coating layer of the present invention may easily insulate a portion between the first end, from which the first electrode tab is extended, and the second electrode having a different polarity from the first end or a portion between the second end, from which the second electrode tab is extended, and the first electrode having a different polarity from the second end.

In the present specification, the battery can may be connected to the first electrode (or the first end) and serve as an electrode terminal.

In the present specification, the battery can may mean a cylindrical secondary battery that accommodates a jelly-roll type electrode assembly.

In the embodiment of the present specification, the secondary battery may be a cylindrical secondary battery having a ratio of a form factor larger than 0.4 (the ratio of the form factor is defined as a value made by dividing a diameter of the cylindrical battery by a height of the cylindrical battery, i.e., a ratio of a diameter Φ to a height H). In this case, the form factor means a value indicating the diameter and the height of the cylindrical secondary battery.

The cylindrical secondary battery according to the embodiment of the present specification may be 46110 cell, 48750 cell, 48110 cell, 48800 cell, or 46800 cell. In the numerical value indicating the form factor, the first two numbers indicate a diameter of the cell, the next two numbers indicate a height of the cell, and the final number 0 indicates that a cross-section of the cell is circular.

The secondary battery according to the embodiment of the present specification may be a cylindrical secondary battery that is a cylindrical cell and has a diameter of 46 mm, a height of 110 mm, and a ratio of the form factor of 0.418.

The secondary battery according to the embodiment of the present specification may be a cylindrical secondary battery that is a cylindrical cell and has a diameter of 48 mm, a height of 75 mm, and a ratio of the form factor of 0.640.

The secondary battery according to the embodiment of the present specification may be a cylindrical secondary battery that is a cylindrical cell and has a diameter of 48 mm, a height of 110 mm, and a ratio of the form factor of 0.436.

The secondary battery according to the embodiment of the present specification may be a cylindrical secondary battery that is a cylindrical cell and has a diameter of 48 mm, a height of 80 mm, and a ratio of the form factor of 0.600.

The secondary battery according to the embodiment of the present specification may be a cylindrical secondary battery that is a cylindrical cell and has a diameter of 46 mm, a height of 80 mm, and a ratio of the form factor of 0.575.

In the present specification, the battery can is electrically connected to the first end, and the battery can comprises the insulative coating layer provided on the inner surface corresponding to the second end, such that the battery can and the second end have the opposite polarities. Therefore, it is possible to prevent unnecessary contact and/or short circuit between the electrodes having the opposite polarities.

According to the embodiment of the present invention, the sidewall of the battery can may further comprise the insulative coating layer provided on the inner surface corresponding to the separator.

According to the embodiment of the present invention, the second electrode may comprise: a current collector; and an electrode active material layer provided on one surface or two opposite surfaces of the current collector. The second electrode tab may be a non-coated portion of the current collector on which no electrode active material layer is provided.

According to another embodiment of the present invention, the first electrode tab and/or the second electrode tab may be a component provided separately from the non-coated portion, and the first electrode tab and/or the second electrode tab may be connected to the non-coated portion by a method such as welding.

In the present specification, the current collector may also be referred to as the term "current collector layer". The material of the current collector may vary depending on the polarity. A positive electrode current collector may be made of aluminum or the like, and a negative electrode current collector may be made of copper or the like. However, any current collector publicly known in the art may be used without limitation.

In the present specification, the electrode active material layer may be made by applying an electrode active material onto one surface or two opposite surfaces of the current collector.

In the present specification, the type of electrode active material varies depending on the polarity. A lithium-containing metal oxide such as LiCoO₂ or LiMn₂O₅ may be mainly used as the positive electrode active material, but any active material publicly known in the art may be used without limitation. A carbon-based material, silicon-based material, or the like may be mainly used as the negative electrode active material, but any active material publicly known in the art may be used without limitation.

In the present specification, the configuration in which "the electrode tab is the non-coated portion of the current collector on which no electrode active material layer is provided" means that the non-coated portion on the current collector serves as the electrode tab. However, a short circuit may occur when the non-coated portion comes into contact with the electrode having a different polarity from the non-coated portion.

In the present specification, a short circuit may be prevented because the insulative coating layer is provided on the sidewall of the battery can (e.g., the first electrode) corresponding to the non-coated portion (e.g., the non-coated portion of the second electrode).

In the present specification, the second electrode tab is the non-coated portion. The non-coated portion may mean a portion made by forming metal foil by slitting an electrode having a stripe pattern to reduce cell resistance.

According to the embodiment of the present invention, the electrode tab may be bent in a direction toward a winding center or outer periphery of the electrode assembly. According to the embodiment of the present invention, the secondary battery may further comprise: the second current collecting plate electrically connected to the second electrode tab; and the insulation member provided between the second current collecting plate and the bottom portion of the battery can.

In the present specification, the second electrode tab (or the non-coated portion) may be electrically connected to the second current collecting plate by welding.

In the present specification, the secondary battery may comprise the insulation member (e.g., the insulator) between the second current collecting plate and the bottom portion of the battery can. In this case, the insulation member may have a straight shape without having a bent shape in the related art. Therefore, it is possible to prevent a waste of space caused when the insulation member is bent. Therefore, it is possible to increase a space that may be ensured by the electrode assembly.

In the secondary battery according to the embodiment, positions insulated by the insulation member and the insulative coating layer are separated and designated in comparison with a space occupied by the insulation member (the additional insulation tape) in the related art. Therefore, it is possible to increase a diameter of the electrode assembly capable of being accommodated in the battery can having the same dimension.

According to the embodiment of the present invention, the second end may be disposed adjacent to the bottom portion of the battery can.

According to the embodiment of the present invention, the secondary battery may further comprise the second electrode terminal having a structure riveted through a through-hole formed in the bottom portion of the battery can.

In the specification, the riveting structure of the electrode terminal is formed by bending an upper surface of the electrode terminal so that an outer diameter of a portion the electrode terminal, which is exposed to the outside of the battery can, is larger than an outer diameter of the through-hole of the battery can. In this case, a portion of the gasket, which is exposed to the outside of the battery can, is also bent by an angle equal to an angle by which the electrode terminal is bent during a process of pressing the electrode terminal with pressure. The outer diameter of the through-hole means a diameter of the through-hole.

According to the embodiment of the present invention, the secondary battery may comprise a gasket interposed between the battery can and the second electrode terminal.

According to the embodiment of the present invention, the insulative coating layer may comprise, but not limited to, one or more materials selected from alumina (Al₂O₃), aluminum nitride (AlN), magnesium oxide (MgO), boron nitride (BN), silicon carbide (SiC), and silicon nitride (Si₃N₄).

As described above, the insulative coating layer comprises a high-heat resistance material such as alumina. When a high temperature is made by an increase in internal temperature of the battery, the insulative coating layer may exhibit an excellent heat dissipation effect and maintain excellent insulation of the insulative coating layer, thereby effectively insulating the portion between the battery can connected to the first end and the second end of the electrode assembly.

According to the embodiment of the present invention, a thickness of the insulative coating layer may be 200 um or less.

According to the embodiment of the present invention, the thickness of the insulative coating layer may be more than 30 um and 200 um or less.

According to the embodiment of the present invention, the thickness of the insulative coating layer may be more than 30 µm, more than 40 µm, or more than 50 um, or 200 um or less, 190 um or less, or 180 um or less.

In the present specification, when the range of the thickness of the insulative coating layer is satisfied, the diameter of the electrode assembly accommodated in the battery can may be large.

In the embodiment of the present invention, a thickness of the insulation member may be more than 500 um and 1,500 um or less.

According to the embodiment of the present invention, the thickness of the insulation member may be more than 500 µm, more than 600 µm, or more than 700 um.

According to the embodiment of the present invention, the thickness of the insulation member may be 1,500 um or less, 1,400 um or less, or 1,300 um or less.

In the present specification, the thickness of the insulation member is remarkably larger than the thickness of the insulative coating layer. When this thickness range is satisfied, it is possible to effectively insulate the portion between the battery can and the current collecting plate that have different polarities.

According to the embodiment of the present invention, the thickness of the insulative coating layer may be 0.45% or less of the diameter of the electrode assembly in the wound state.

According to the embodiment of the present invention, the thickness of the insulative coating layer may be 0.06% or more of the diameter of the electrode assembly in the wound state.

In the present specification, when the thickness of the insulative coating layer with respect to the diameter of the electrode assembly in the wound state satisfies the range, the diameter of the electrode assembly accommodated in the battery can may be large.

In the embodiment of the present specification, the first end may be positioned adjacent to the opening portion of the battery can.

In the embodiment of the present specification, the secondary battery may further comprise a first current collecting plate electrically connected to the first electrode tab.

In the embodiment of the present specification, the secondary battery may further comprise a sealing body configured to seal the opening portion of the battery can, and the sealing body may comprise a cap plate and a sealing gasket. For example, the cap plate configured to seal the opening portion of the battery can has no polarity and may be made of a metallic material. The sealing gasket having insulation and elasticity may be made of, but not limited to, polypropylene, polybutylene terephthalate, polyfluoroethylene, and the like.

In the present specification, the first electrode tab (or the non-coated portion) may be electrically connected to the first current collecting plate by welding. The first current collecting plate may be made of, but not limited to, a conductive metallic material such as aluminum, steel, or nickel.

In the present specification, the battery can may comprise a crimping portion extending and bent toward the inside of the battery can and configured to surround and fix an edge of the cap plate and the sealing gasket to fix the sealing body.

In the present specification, the battery can may comprise a beading portion pressed toward the inside of the battery can and provided in a region adjacent to an open end. When the sealing body is fixed by the crimping portion, the beading portion supports the edge of the sealing body, particularly, an outer periphery surface of the sealing gasket.

In the present specification, the first current collecting plate may be fixed by the crimping portion as at least a part of the edge, which is not in contact with the first electrode tab (the non-coated portion), is interposed between the beading portion and the sealing gasket. Selectively, at least a part of the edge of the first current collecting plate may be fixed, by welding, to an inner peripheral surface of the beading portion disposed adjacent to the crimping portion.

In the embodiment of the present invention, the first electrode may be a negative electrode, and the second electrode may be a positive electrode.

Still yet another embodiment of the present invention provides a battery module and/or a battery pack that comprise the secondary battery according to the above-mentioned embodiment.

Another further embodiment of the present invention provides a vehicle comprising one or more battery packs according to the above-mentioned embodiment.

Hereinafter, the embodiment of the present invention will be described with reference to the drawings.

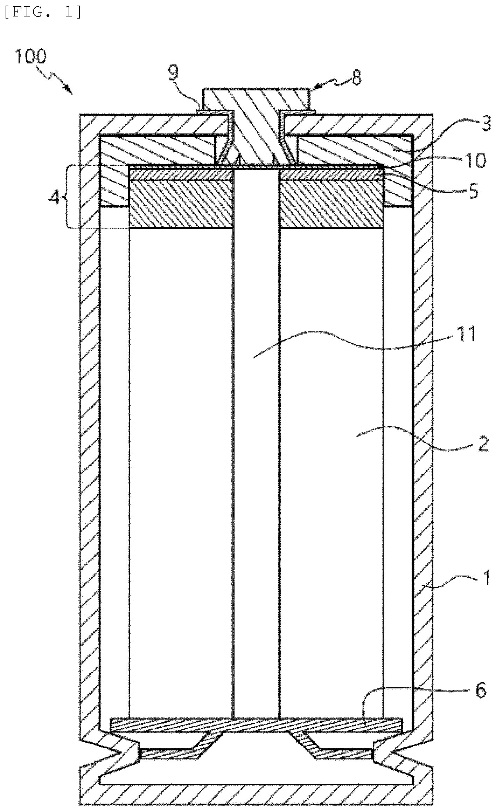

FIG. 1 illustrates an embodiment in the related art and illustrates a secondary battery 100 in which an insulation member 3 (e.g., an insulator) having a thickness of about 1 mm (about 1,000 um) surrounds a battery can 1, a second electrode current collecting plate 10, and a second electrode end 5 once, and an additional insulation member such as an insulation tape 4 surrounds a peripheral portion of the second electrode end 5 one or more times to implement additional insulation. The above-mentioned insulation method not only complicates a process of assembling a battery but also increases a volume of the insulation member that occupies the inside of the battery can, which causes a problem in that a volume capable of being occupied by the electrode assembly decreases, and a battery capacity decreases.

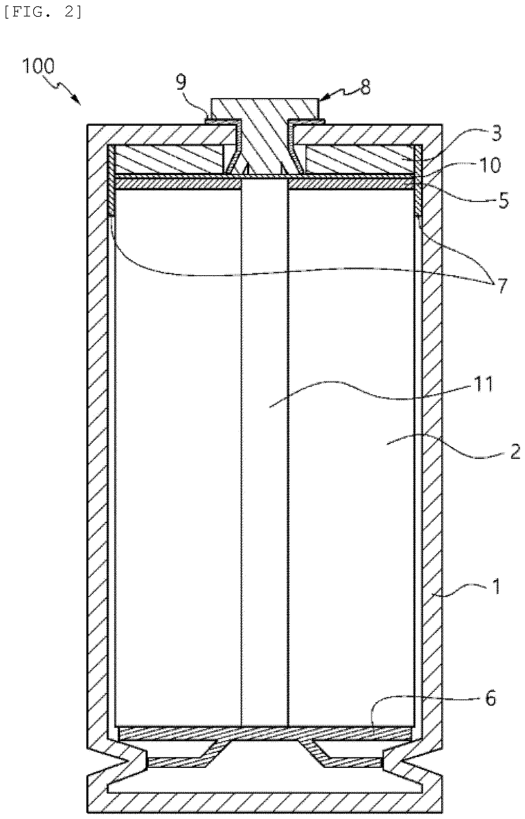

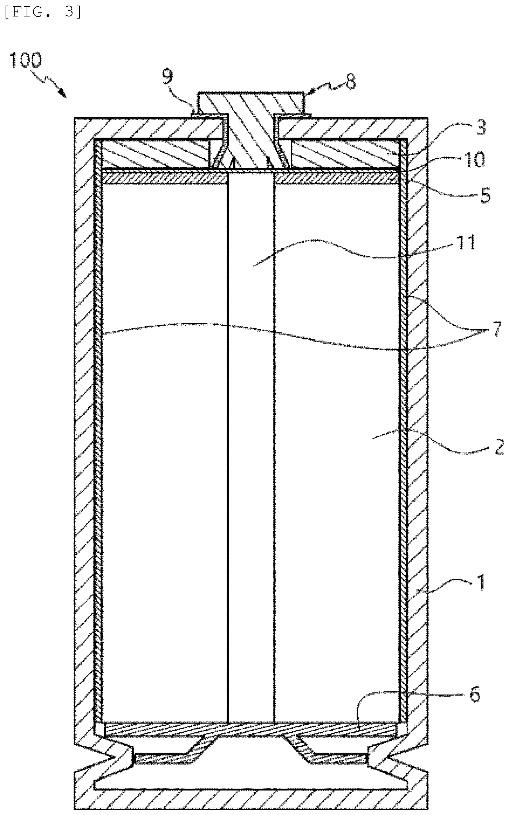

FIGS. 2 and 3 are views illustrating the secondary battery according to the embodiment of the present invention. The sidewall of the battery can 1 comprises an insulative coating layer 7 provided on an inner surface corresponding to the second electrode end 5. As illustrated in FIG. 2, the insulative coating layer 7 may be provided only on the inner surface corresponding to the second electrode end 5. In addition, as illustrated in FIG. 3, the insulative coating layer 7 may be additionally provided on an inner surface (selectively, an entire inner wall of the battery can 1) corresponding to the separator in addition to the inner surface corresponding to the second electrode end 5.

According to the secondary battery according to the embodiment, the process may be simplified, and the diameter of the electrode assembly may be increased, which makes it possible to increase the battery capacity.

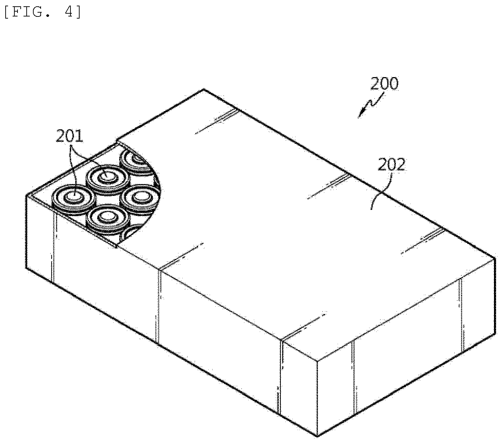

Referring to FIG. 4, a battery pack 200 according to the embodiment of the present invention comprises an assembly to which a secondary battery cell 201 is electrically connected, and a pack housing 202 configured to accommodate the assembly. The cylindrical secondary battery cell 201 means the secondary battery according to the above-mentioned embodiment.

For convenience of illustration, components such as busbars for electrical connection between the secondary battery cell 201, a cooling unit, and an external terminal are omitted from the drawings.

The battery pack 200 may be mounted on a vehicle. For example, the vehicle may be an electric vehicle, a hybrid vehicle, or a plug-in hybrid vehicle. The vehicle may be a four-wheel vehicle or a two-wheel vehicle.

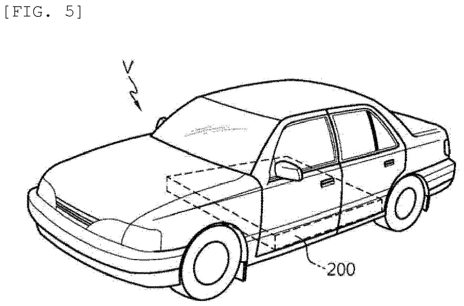

FIG. 5 is a view for explaining a vehicle comprising the battery pack 200 illustrated in FIG. 4. Referring to FIG. 5, a vehicle V according to the embodiment of the present specification comprises the battery pack 200 according to the embodiment of the present specification. The vehicle V operates by receiving electric power from the battery pack 200 according to the embodiment of the present invention.

### [Mode for Invention]

Hereinafter, examples are provided to assist in understanding the present invention, but the examples are provided only to exemplify the present invention. It is apparent to those skilled in the art that various modifications and alterations may be made within the technical spirit of the present invention, and these modifications and alterations belong to the appended claims.

### Comparative Example 1

A battery can having an outer diameter and thickness shown in Table 1 below was prepared. An insulator having a bent shape was provided on a bottom portion of the battery can. An insulation tape was provided on the assumption that a thickness of a current collecting plate was not considered and a positive electrode end in the insulator is surrounded once by the insulation tape. Therefore, a diameter of an electrode assembly (jelly-roll) capable of being accommodated in the battery can is as shown in Table 1. For reference, a diameter of the electrode assembly was set only in consideration of a lateral side of the battery can.

### Example 1

A battery can was prepared under the same condition as Comparative Example 1. An insulator having a straight shape was provided on a bottom portion of the battery can, and a thickness of a current collecting plate was not considered. An insulative coating layer comprising alumina was provided on a sidewall of the battery can. A thickness of the insulative coating layer is as shown in Table 1. Therefore, a diameter of an electrode assembly (jelly-roll) capable of being accommodated in the battery can is as shown in Table 1.

**[Table 1]**

| Classification | Comparative Example 1 | Example 1 |
|---|---|---|
| Outer diameter (mm) of battery can | 46.0 | 46.0 |
| Thickness (mm) of battery can | 0.5 | 0.5 |
| Thickness (mm) of insulator | 1.0 | - |
| Thickness (mm) of insulation tape | 0.03 | - |
| Thickness (mm) of insulative coating layer | - | 0.1 (100 µm) |
| Diameter (mm) of electrode assembly in wound state capable of being accommodated in battery can | 42.94 | 44.8 |

As shown in Table 1, the diameter of the electrode assembly in the wound state capable of being accommodated in the battery can is larger in Example 1 than in Comparative Example 1. Because Comparative Example 1 was set such that the insulation tape is wound only once, it can be sufficiently expected that when the insulation tape is wound two or more times, the diameter of the electrode assembly in the wound state will become smaller than that in Comparative Example 1.

The present invention has been described with reference to the limited embodiments and the drawings, but the present invention is not limited thereto. The described embodiments may be changed or modified by those skilled in the art to which the present invention pertains within the technical spirit of the present invention and within the scope equivalent to the appended claims.

## Claims

1. A secondary battery comprising:
an electrode assembly configured by winding a stack made by sequentially stacking a first electrode, a separator, and a second electrode; and
a battery can configured to accommodate the electrode assembly and an electrolyte,
wherein the battery can has a bottom portion at one side thereof, an opening portion at the other side opposite to the bottom portion, and a cylindrical sidewall,
wherein the electrode assembly has a first end from which a first electrode tab is extended, and a second end from which a second electrode tab is extended,
wherein the first end and the battery can are electrically connected,
wherein the sidewall of the battery can comprises an insulative coating layer provided on an inner surface corresponding to the second end,
wherein a second current collecting plate is electrically connected to the second electrode tab, and
wherein an insulation member is provided between the second current collecting plate and the bottom portion of the battery can.

2. The secondary battery of claim 1, wherein a sidewall of the battery can further comprises an insulative coating layer provided on an inner surface corresponding to the separator.

3. The secondary battery of claim 1, wherein the second electrode comprises:
a current collector; and
an electrode active material layer provided on one surface or two opposite surfaces of the current collector, and
wherein the second electrode tab is a non-coated portion of the current collector on which no electrode active material layer is provided.

4. The secondary battery of claim 1, wherein the second end is disposed adjacent to the bottom portion of the battery can.

5. The secondary battery of claim 1, further comprising:
a second electrode terminal having a structure riveted through a through-hole formed in the bottom portion of the battery can.

6. The secondary battery of claim 5, comprising:
a gasket interposed between the battery can and the second electrode terminal.

7. The secondary battery of claim 1, wherein the insulative coating layer comprises one or more materials selected from alumina (Al₂O₃), aluminum nitride (AlN), magnesium oxide (MgO), boron nitride (BN), silicon carbide (SiC), and silicon nitride (Si₃N₄).

8. The secondary battery of claim 1, wherein a thickness of the insulative coating layer is 200 um or less.

9. The secondary battery of claim 1, wherein a thickness of the insulative coating layer is more than 30 um and 200 um or less.

10. The secondary battery of claim 1, wherein a thickness of the insulation member is more than 500 um and 1,500 um or less.

11. The secondary battery of claim 1, wherein a thickness of the insulative coating layer is 0.45% or less of a diameter of the electrode assembly in a wound state.

12. The secondary battery of claim 1, wherein the second electrode tab is bent in a direction toward a winding center or outer periphery of the electrode assembly.

13. The secondary battery of claim 1, further comprising:
a cap plate configured to seal the opening portion of the battery can.

14. The secondary battery of claim 1, further comprising:
a first current collecting plate electrically connected to the first electrode tab.

15. The secondary battery of claim 1, further comprising:
a sealing body configured to seal the opening portion of the battery can,
wherein the sealing body comprises a cap plate and a sealing gasket.

16. The secondary battery of claim 1, wherein the first electrode is a negative electrode, and the second electrode is a positive electrode.

17. A battery pack comprising one or more secondary batteries according to any one of claims 1 to 16.

18. A vehicle comprising one or more battery packs according to claim 17.
